**Europäisches Patentamt**

**European Patent Office**

**Office européen des brevets**

(19)

(11) Veröffentlichungsnummer: **0 244 855 B1**

# EUROPÄISCHE PATENTSCHRIFT

(12)

(45) Veröffentlichungstag der Patentschrift: **08.09.93**

(51) Int. Cl.5: **C08F 210/02**, //C08F2/00, (C08F210/02,218:04)

(21) Anmeldenummer: **87106593.4**

(22) Anmeldetag: **07.05.87**

(54) **Verfahren zur Herstellung von Copolymerisaten des Ethylens mit Vinylestern in einem Röhrenreaktor bei Drücken oberhalb 500 bar.**

(30) Priorität: **09.05.86 DE 3615563**

(43) Veröffentlichungstag der Anmeldung: **11.11.87 Patentblatt 87/46**

(45) Bekanntmachung des Hinweises auf die Patenterteilung: **08.09.93 Patentblatt 93/36**

(84) Benannte Vertragsstaaten: **AT BE DE FR GB NL**

(56) Entgegenhaltungen:
DE-A- 1 520 227      DE-A- 1 645 639
DE-A- 2 128 134      FR-A- 2 018 538
GB-A- 1 010 847      US-A- 3 725 378

(73) Patentinhaber: **BASF Aktiengesellschaft Carl-Bosch-Strasse 38 D-67063 Ludwigshafen(DE)**

(72) Erfinder: **Pfleger, Klaus, Dr. Ottostrasse 6 D-5047 Wesseling(DE)**
Erfinder: **Boettcher, Klaus, Dr. Antoniusstrasse 5 D-5047 Wesseling(DE)**
Erfinder: **Buechner, Oskar, Dr. Sickingenstrasse 4 D-6724 Dudenhofen(DE)**
Erfinder: **Kanne, Friedrich, Dr. Antoniusstrasse 3 D-5047 Wesseling(DE)**
Erfinder: **Kursawe, Siegfried Fasanenweg 4 D-5047 Wesseling(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Copolymerisaten des Ethylens mit Vinylestern durch Copolymerisation von 100 Gewichtsteilen Ethylen mit 0,1 bis 30 Gewichtsteilen Vinylester in einem kontinuierlich betriebenen, rohrförmigen Polymerisationssystem bei Drücken von 500 bis 5000 bar und Temperaturen von 50 bis 450°C in Gegenwart von radikalisch zerfallenden Polymerisationsinitiatoren, indem man dem Polymerisationssystem durch einen Hauptstrom an dessen Einlaßstelle und gleichzeitig durch mindestens zwei Nebenströme hinter der Einlaßstelle entlang des Polymerisationssystems ein Gemisch aus Ethylen, Vinylester, Initiator und gegebenenfalls Regler zuführt.

Es ist bereits bekannt, bei der Hochdruckpolymerisation von Ethylen den Ethylenstrom in mehrere Teilströme aufzuteilen und den Hauptstrom nach dem Erwärmen auf Anspringtemperatur in den Anfang eines röhrenförmigen Reaktors einzuleiten. Der andere bzw. die anderen Nebenströme werden dann bei diesem bekannten Verfahren an mehreren in Strömungsrichtung des polymerisierenden Ethylens hintereinander liegenden Stellen des Reaktors zugeführt. Das kalte Ethylen wird dabei an oder kurz hinter den Stellen des Reaktors eingeleitet, wo das Polymerisationsgemisch im Reaktor die maximal zulässige Polymerisationstemperatur überschritten hat. Dabei wird die Temperatur des kalt eingeleiteten Ethylens, welches ebenfalls Initiator enthält, so bemessen, daß die Temperatur nach der Zumischung im Reaktor nicht unter die Anspringtemperatur der Ethylenpolymerisation, die von dem verwendeten Katalysator abhängt, sinkt (vgl. GB-Patente 1 010 847, 915 210 und 1 347 361).

Auf diese Weise ist es möglich, den Umsatz des Ethylens zu Polyethylen pro Durchsatz zu erhöhen. Bei diesem bekannten Verfahren werden dem Ethylen z.B. vor oder nach der Komprimierung geringe Mengen Luftsauerstoff als Polymerisationsinitiator zugegeben. Auch können statt Luftsauerstoff Peroxide oder Hydroperoxide oder Mischungen von Peroxidverbindungen zugefügt werden (vgl. US-Patent 3 725 378).

Die bekannten Verfahren haben den Nachteil, daß entweder Produkte mit mangelhafter Beständigkeit gegen Spannungsrißkorrosion entstehen, oder daß die Verfahren unwirtschaftlich betrieben werden müssen, wenn man Produkte mit verbesserter Spannungsrißkorrosionsbeständigkeit erhalten will. Unwirtschaftlich sind die bekannten Verfahren deshalb, weil bei der Zugabe des Vinylesters überwiegend zum Hauptstrom - theoretisch müßten hierbei die Produkte mit der besten Beständigkeit gegen die Spannungsrißkorrosion zu erhalten sein - durch die Reglerwirkung der Comonomere Produkte mit hohem Schmelzindex entstehen, die wegen ihres hohen Anteils an niedermolekularen Polymeren ungeeignet sind hinsichtlich der Beständigkeit gegen Spannungsrißkorrosion; es muß deshalb gegengesteuert werden, durch Absenken der Initiatorkonzentration bzw. der Reaktionstemperaturen, was eine starke Absenkung des Umsatzes bedeutet.

Der vorliegenden Erfindung liegt die Aufgabe zugrunde, ein Verfahren zur Copolymerisation von Ethylen mit Vinylestern in einem röhrenförmigen Polymerisationssystem aufzufinden, bei dem unter Beibehaltung des guten Umsatzes die mechanische Festigkeit und vor allem die Beständigkeit gegen die Spannungsrißkorrosion der aus dem Copolymerisat hergestellten Produkte verbessert werden.

Die Aufgabe wird erfindungsgemäß durch ein Verfahren gemäß Patentansprüche 1 bis 4 gelöst.

Unter Ethylen-Vinylester-Copolymerisaten werden die Copolymerisate des Ethylens verstanden, die bei den angegebenen Temperatur- und Druckverhältnissen, bevorzugt bei einem Druck von 1500 bis 3000 bar und bei einer Temperatur zwischen 150 und 350°C, herstellbar sind. Der Ausdruck Ethylen-Vinylester-Copolymerisate umfaßt Copolymerisate mit Gehalten an einpolymerisiertem Comonomerenanteil von 0,2 bis zu 30,0, bevorzugt 0,5 bis 20,0 Gewichtsprozent, die einen Schmelzindex von 0,1 bis 25 g/10 min, bestimmt nach ASTM-D 1238-65 T bei einer Temperatur von 190°C und einem Auflagegewicht von 2,16 kg, und eine Dichte von 0,890 bis 0,934 $g/cm^3$, gemessen nach DIN 53 479, aufweisen. Ethylen-Vinylacetat-Copolymerisate und Verfahren zu deren Herstellung in rohrförmigen Polymerisationssystemen aus den Monomeren sind beispielsweise in den Druckschriften US-Patent 4 048 411, DE-Patent 2 617 412 oder EP-A-175 316 beschrieben.

Als Vinylester kommen sämtliche mit Ethylen bei den angegebenen Temperaturen und Druckverhältnissen copolymerisierbare Vinylester in Betracht. Solche Comonomere sind z.B. Vinylester der Carbonsäuren mit $C_1$- bis $C_8$-, vorzugsweise $C_1$- bis $C_6$-Atomen. Insbesondere bevorzugt ist Vinylacetat.

Das Ethylen wird mit den Vinylestern in Gegenwart radikalischer Initiatoren copolymerisiert. Unter radikalischen Polymerisationsinitiatoren sollen diejenigen Katalysatoren verstanden werden, die auch für die Homopolymerisation des Ethylens unter hohem Druck verwendet werden. Geeignet ist beispielsweise Sauerstoff, zweckmäßigerweise in Mengen von 2 bis 100 Mol-ppm, bezogen auf das zu polymerisierende Ethylen. In Betracht kommen außerdem Peroxide und andere Radikalbildner sowie Gemische von Peroxiden, die unterschiedliche Zersetzungspunkte haben und Hydroperoxide sowie Mischungen aus Sauerstoff und Peroxiden und/oder Hydroperoxiden. Als Beispiele für Peroxide und Hydroperoxide seien genannt: tert.-

Butylperoxypivalat, Di-tert.-butylperoxid, tert.-Butylhydroperoxid, tert.-Butylperbenzoat, p-Methanhydroperoxid und Dilauroylperoxid. Unter radikalischen Polymerisationsinitiatoren sollen auch Verbindungen wie Azoisobuttersäuredinitril verstanden werden. Man kann auch Mischungen aus Sauerstoff und einem oder mehreren Peroxiden verwenden. Bevorzugt wird die Copolymerisation des Ethylens mit Vinylestern durch Luftsauerstoff initiiert.

Gegebenenfalls arbeitet man in Gegenwart von Polymerisationsregler. Mit Hilfe der Polymerisationsregler ist es möglich, den Schmelzindex der entstehenden Ethylencopolymerisate einzustellen. Als Regler eignen sich beispielsweise Wasserstoff, Ketone, Aldehyde, Alkohole, Ether oder normale und verzweigte Kohlenwasserstoffe. Vorzugsweise verwendet man Propan, Propylen, Methylethylketon oder Propionaldehyd. Die Polymerisationsregler werden im allgemeinen in Mengen von 0,2 bis 5 Molprozent, bezogen auf das zu polymerisierende Ethylen eingesetzt. In einer besonderen Ausgestaltung arbeitet man ohne zusätzliche Regler, da die eingesetzten Vinylester Reglereigenschaften besitzen.

Die Copolymerisation wird im allgemeinen in Abwesenheit eines Lösungsmittels durchgeführt. Die geringen Mengen eines inerten Lösungsmittels, wie Benzol, Mineralöl oder andere inerte Lösungsmittel, in denen die Polymerisationsinitiatoren gelöst werden, können gegenüber den anderen Einsatzstoffen vernachlässigt werden. Wird mit Sauerstoff als Polymerisationsinitiator gearbeitet, kann jegliches Lösungsmittel entfallen.

Das Verfahren läßt sich unter Anwendung der üblichen kontinuierlich betriebenen röhrenförmigen Hochdruckpolymerisationssysteme (Rohrreaktoren) ausführen. Unter Rohrreaktoren versteht man rohrförmige Polymerisationsgefäße, deren Verhältnis Länge zum Durchmesser der druckfesten Rohre im Bereich 10 000 bis 60 000 zu 1 liegt. Angaben über Ethylenhochdruckpolymerisationsverfahren, bei denen Rohrreaktoren benutzt werden, finden sich beispielsweise in "Ullmanns Encyklopädie der technischen Chemnie", 1980, 4. Auflage, Band 19, Seiten 167 bis 178, Verlag Chemie GmbH, D-6940 Weinheim.

Das gasförmige Gemisch aus Ethylen, Vinylester, Initiator und gegebenenfalls Regler wird nach bekannten Verfahren an der Einlaßstelle und gleichzeitig an einer zweiten Stelle hinter der Einlaßstelle entlang des Rohrreaktors in Strömungsrichtung des polymerisierenden Ethylens, wo die Reaktionstemperatur ein Maximum überschritten hat, dem Reaktor zugeführt. Unter Einlaßstelle wird im allgemeinen der Anfang des rohrförmigen Reaktors verstanden. Der Hauptstrom wird dabei am Anfang des Reaktors zugeleitet, der Nebenstrom wird dem Reaktor in bekannter Weise an einer Stelle, hinter der sich ein Temperaturmaximum ausbildet, zugeführt. Durch diese Maßnahme wird die Reaktionsführung des bekannten Zweizonen-Rohrreaktors erhalten.

In dem erfindungsgemäß verbesserten Verfahren wird nun so verfahren, daß zugeführt werden Nebenströme (I) an Stellen, wo die Reaktionstemperatur ein durch die Polymerisationswärme entstandenes Temperaturmaximum gerade überschritten hat und Nebenströme (II) jeweils an Stellen, die - relativ zur Fließrichtung des Ethylens - vor den Zuführstellen der Nebenströme (I) und vor dem jeweiligen Temperaturmaximum liegen. Nach bevorzugter Verfahrensweise wird ein Nebenstrom (I) an einer Stelle, wo die Reaktionstemperatur ein Temperaturmaximum gerade überschritten hat und ein Nebenstrom (II) vor diesem Temperaturmaximum zugeführt. Diese Verfahrensweise ist in sog. Zweizonenreaktoren anwendbar, wobei der Nebenstrom (II) zusätzlich vor dem Temperaturmaximum in die laufende Reaktion eingespeist wird. Bevorzugt wird bei dem erfindungsgemäßen Verfahren der Nebenstrom (I) an einer Stelle eingeführt, wo das Reaktionsgemisch im Rohrreaktor eine Temperatur von 270 bis 290°C aufweist und der Nebenstrom (II) an einer davorliegenden Stelle, wo im Reaktionsgemisch eine um 30 bis 60, insbesondere 45 bis 55°C niedere Temperatur herrscht als beim Temperaturmaximum. Insbesondere bevorzugt ist auch eine Verfahrensweise, bei der die zur Copolymerisation benötigte Menge Vinylester überwiegend durch den Hauptstrom und den Nebenstrom II zugeführt wird.

Das Verhältnis der Gasströme Hauptstrom zu Nebenstrom I und Nebenstrom II wird im Bereich von 10:9:1 bis 10:5:5 gehalten. Bei der Einleitung des Nebenstroms II in den Reaktor, vorzugsweise bei einer Temperatur des Reaktionsgemischs von 240 bis 260°C, wird die Temperatur des Gemisches zunächst auf 210 bis 240°C abgesenkt und erreicht sodann Maxima von 290 bis 310°C, insbesondere 300 bis 310°C.

Durch die erfindungsgemäße Maßnahme zeigt sich, daß eine Verbesserung der mechanischen Festigkeit, vor allem der Beständigkeit gegen Spannungsrißkorrosion der aus dem Ethylen-Vinylester-Copolymerisat hergestellten Produkte erreicht werden kann.

Das Ethylen wurde gemäß Beispiel zunächst in zwei separaten Gasströmen mit der angegebenen Sauerstoff- und Comonomerenmenge versetzt und bis auf den Reaktionsdruck von 2300 bar aufkomprimiert. Ein Nebenstrom (II) wurde vor der Vereinigung der aufkompromierten Gasströme abgezweigt und an der Einspeisestelle vor dem Temperaturmaximumn in die "laufende" Reaktion, ein anderer Nebenstrom (I) kurz hinter dem Temperaturmaximum eingespeist; der Hauptstrom wird am Reaktoreingang zugeführt. Man arbeitet mit Röhrenreaktoren bekannter Bauart. Beim Zweizonenreaktor liegt die Einspeisstelle des Nebenstroms (II) vor dem Temperaturmaximum der ersten Reaktionszone, es ist auch möglich, für beide Reaktionszonen mit jeweils einer Einspeisestelle vor dem entsprechenden Temperaturmaximum zu arbeiten.

Der Reaktor hatte ein Längen-/Durchmesserverhältnis von etwa 10 500:1. Zur Abführung eines Teiles der Polymerisationswärme wurden die Rohrwände von außen mit Wasser gekühlt. Bei der Ausführung des Vergleichsbeispiels wurde die entsprechende Vinylestermenge nur dem Hauptgasstrom und dem Nebenstrom I zugegeben; es wurde ohne Nebenstrom II gefahren. Das anfallende Copolymerisat wurde in bekannter Weise in den dem Reaktor nachgeschalteten Abscheidern von den nicht umgesetzten Monomeren abgetrennt.

Beispiele

Die Copolymerisation des Ethylens mit Vinylacetat wurde in allen Fällen in einem rohrförmigen Reaktor durchgeführt. Das Ethylen wurde in separaten Gasströmen mit der jeweils angegebenen Sauerstoffmenge und Comonomerenmenge versetzt und bis auf Reaktionsdruck aufkomprimiert. Bei einem Reaktionsdruck von 2300 bar, gemessen am Reaktoreingang, erreichte das Reaktionsgemisch vor der 1. Einspeisstelle durch die freiwerdende Reaktionswärme eine Temperatur von 255°C, durchlief nach der Zugabe des Nebenstroms II einen Temperaturbereich von 215 bis 230°C und erreichte danach in der Mitte der Reaktionszone bei der 2. Einspeisstelle eine maximale Temperatur von 302°C. In die Gasströme wurden folgende Mengen an Vinylacetat (Vac) und Sauerstoff dosiert:

| Beispiel | Hauptstrom | | Nebenströme | | | |
| | | | I | | II | |
| | VAc (kg) | $O_2$ (Mol-ppm) | VAc (kg) | $O_2$ (Mol-ppm) | VAc (kg) | $O_2$ (Mol-ppm) |
| --- | --- | --- | --- | --- | --- | --- |
| 1 | 400 | 12,2 | 500 | 10,1 | 150 | 10,1 |
| 2 | 560 | 14,0 | 325 | 12,4 | 175 | 12,4 |
| Vgl. 1 | 450 | 8,7 | 550 | 9,5 | 0 | 0 |
| Vgl. 2 | 900 | 7,8 | 300 | 8,0 | 0 | 0 |

$O_2$ (Mol-ppm) = Angabe ist auf den jeweiligen Ethylenstrom bezogen

Die Eigenschaften der erhaltenen Copolymerisate und die Umsätze der für die Beispiele angegebenen Reaktoreinstellungen sind in der folgenden Übersicht zusammengefaßt.

Eigenschaften der Copolymerisate

| Beispiel | Umsatz (Gew.%) | MI (g/10 min) | Dichte (g/cm³) | VAc-Gehalt (Gew.%) | Spannungsriß- korrosionsbe- ständigkeit |
|---|---|---|---|---|---|
| 1 | 24,8 | 3,92 | 0,9313 | 12,3 | 500-2000 Std. |
| 2 | 26,5 | 4,23 | 0,9306 | 12,8 | > 2500 Std. |
| Vgl. 1 | 23,0 | 4,43 | 0,9327 | 13,2 | 50-450 Std. |
| Vgl. 2 | 20,5 | 4,35 | 0,9334 | 12,5 | 100-800 Std. |

Umsatz:        Angabe in Gew.%, bezogen auf das dem Reaktor insgesamt
               zugeführte Reaktionsgemisch

MI =           Schmelzindex: g/10 min gemessen nach DIN 53 735

Dichte:        g/cm³ gemessen nach DIN 53 479

VAc-Gehalt:    Anteil Vinylacetat im Copolymerisat einpolymerisiert, Angabe
               in Gew.%

Spannungsrißkorrosionsbeständigkeit:
Widerstandsfähigkeitstest gegen Spannungsrißbildung nach dem Bell Telefon
Test gemäß ASTM D 1693, Angabe der Standzeiten der Probekörper in Stunden


**Patentansprüche**

1.  Verfahren zur Herstellung von Copolymerisaten des Ethylens mit Vinylestern durch Copolymerisation von 100 Gewichtsteilen Ethylen mit 0,1 bis 30,0 Gewichtsteilen Vinylester in einem kontinuierlich betriebenen, rohrförmigen Polymerisationssystem bei Drücken von 500 bis 5000 bar und Temperaturen von 50 bis 450°C in Gegenwart von radikalisch zerfallenden Polymerisationsinitiatoren, indem man dem Polymerisationssystem durch einen Hauptstrom an dessen Einlaßstelle und gleichzeitig durch mindestens zwei Nebenströme hinter der Einlaßstelle entlang des Polymerisationssystems ein Gemisch aus Ethylen, Vinylester, Initiator und gegebenenfalls Regler zuführt, dadurch gekennzeichnet, daß zugeführt werden Nebenströme (I) an Stellen, wo die Reaktionstemperatur ein durch die Polymerisationswärme entstandenes Temperaturmaximum von 290 bis 310°C gerade überschritten hat und Nebenströme (II) jeweils an Stellen, die - relativ zur Fließrichtung des Ethylens - vor den Zufuhrstellen der Nebenströme (I) und vor dem jeweiligen Temperaturmaximum liegen.

2.  Verfahren nach Anspruch 1, dadurch gekennzeichnet, daß ein Nebenstrom (I) an einer Stelle, wo die Reaktionstemperatur ein Temperaturmaximum gerade überschritten hat und ein Nebenstrom (II) vor diesem Temperaturmaximum zugeführt wird.

3.  Verfahren nach Anspruch 1, dadurch gekennzeichnet, daß der Nebenstrom (I) an einer Stelle zugeführt wird, wo das Reaktionsgemisch eine Temperatur von 270 bis 290°C aufweist und der Nebenstrom (II) an einer davor liegenden Stelle, wo im Reaktionsgemisch eine um 30 bis 60°C tiefere Temperatur herrscht.

4.  Verfahren nach Anspruch 1, dadurch gekennzeichnet, daß die zur Copolymerisation benötigte Menge Vinylester überwiegend durch den Haupt- und den Nebenstrom II zugeführt wird.

5

**EP 0 244 855 B1**

## Claims

1.  A process for preparing a copolymer of ethylene with a vinyl ester by copolymerizing 100 parts by weight of ethylene with from 0.1 to 30.0 parts by weight of vinyl ester in a continuous tubular polymerization system at pressures of from 500 to 5000 bar and at temperatures of from 50 to 450°C in the presence of a polymerization initiator which decomposes into free radicals, by feeding a mixture of ethylene, vinyl ester, initiator and, if appropriate, regulant into the polymerization system in the form of a main stream at the inlet point thereof and at the same time in the form of two or more secondary streams downstream of the inlet point along the polymerization system, which comprises feeding in secondary streams (I) at points where the reaction temperature has just exceeded a maximum temperature of from 290 to 310°C due to the heat of polymerization and secondary streams (II) in each case at points which, relative to the direction of flow of the ethylene, are positioned upstream of the feed points of secondary streams (I) and upstream of the respective maximum temperature.

2.  A process as claimed in claim 1, wherein a secondary stream (I) is fed in at a point where the reaction temperature has just exceeded a maximum temperature and a secondary stream (II) is fed in upstream of this maximum temperature.

3.  A process as claimed in claim 1, wherein the secondary stream (I) is fed in at a point where the reaction mixture has a temperature of from 270 to 290°C and the secondary stream (II) is fed in at a point upstream thereof where the reaction mixture is cooler by from 30 to 60°C.

4.  A process as claimed in claim 1, wherein the amount of vinyl ester required for copolymerization is predominantly fed in as part of the main stream and the secondary stream (II).

## Revendications

1.  Procédé de préparation de copolymères de l'éthylène et d'esters vinyliques, par copolymérisation de 100 parties en poids d'éthylène avec 0,1 à 30,0 parties en poids d'ester vinylique dans un système de polymérisation tubulaire fonctionnant en continu, sous des pressions de 500 à 5000 bar et à des températures de 50 à 450°C, en présence d'initiateurs de polymérisation radicalaire, procédé dans lequel on envoie un mélange d'éthylène, d'ester vinylique, d'initiateur et éventuellement de régulateur dans le système de polymérisation, par un courant principal au point d'admission de ce système et, en même temps, par au moins deux courants secondaires en aval du point d'admission le long du système de polymérisation, caractérisé en ce que des courants secondaires (I) sont introduits en des points où la température de réaction vient de dépasser un maximum de température de 290 à 310°C produit par la chaleur de polymérisation, et en ce que des courants secondaires (II) sont introduits en des points qui sont situés respectivement - par rapport à la direction d'écoulement de l'éthylène - en amont des points d'admission des courants secondaires (I) et en amont du maximum de température.

2.  Procédé selon la revendication 1, caractérisé en ce qu'un courant secondaire (I) est introduit en un point où la température de réaction vient de dépasser un maximum de température et en ce qu'un courant secondaire (II) est introduit en amont de ce maximum de température.

3.  Procédé selon la revendication 1, caractérisé en ce que le courant secondaire (I) est introduit en un point où le mélange réactionnel est à une température de 270 à 290°C, et en ce que le courant secondaire (II) est introduit en un point situé en amont, où il règne, dans le mélange réactionnel, une température inférieure de 30 à 60°C.

4.  Procédé selon la revendication 1, caractérisé en ce que la quantité d'ester vinylique nécessaire pour la copolymérisation est introduite principalement par le courant principal et le courant secondaire II.